# EUROPEAN PATENT SPECIFICATION

(11) **EP 1 796 839 B1**
(45) Date of publication and mention of the grant of the patent: **20.10.2010**
(21) Application number: 05787447.1
(22) Date of filing: 29.09.2005
(51) Int. Cl.: B02C 19/20, B02C 18/18, B02C 18/14, A23N 15/00

(54) **GRATING ROLLER**
RASPELWALZE
ROULEAU GRATTOIR

(30) Priority: 07.10.2004 SE 0402417
(43) Date of publication of application: 20.06.2007
(73) Proprietor: Gösta Larssons Mekaniska Verkstad AB, 295 21 Bromölla (SE)
(72) Inventor: LARSSON, Jörgen, S-290 34 Fjälkinge (SE)
(74) Representative: Hjalmarsson, Magnus Axel
(86) International application number: PCT/SE2005/001433
(87) International publication number: WO 2006/038857

(56) References cited:
- DE-A1- 2 643 307
- DE-A1- 2 651 828
- DE-A1- 3 041 487
- DE-U- 7 140 123
- NL-A- 6 905 509
- US-A- 3 084 730
- US-A- 3 703 917
- US-A- 4 690 788
- US-A- 5 902 685

## Description

### Field of the Invention

The present invention relates to a grating roller, especially intended for grating potatoes and manioc roots, which along its periphery is provided with a plurality of axial grooves for holding strip-shaped grater tools, which are axially inserted into the grooves, which have an undercut with a width increasing radially inwards from the mouth of the grooves, the grooves being spaced apart by axial partitions with a predetermined minimum wall width, seen in the circumferential direction, and having a radial depth.

### Background Art

Grating rollers are used in grating machines for producing starch from raw products, such as potatoes or manioc roots. In the production of starch, starch grains in the cells of the raw product are to be released by grating, separated, washed and dried. When the starch grains are to be released, the raw product is disintegrated by means of a grating machine. A prior art grating roller is disclosed e.g. in DE-U-7140123.

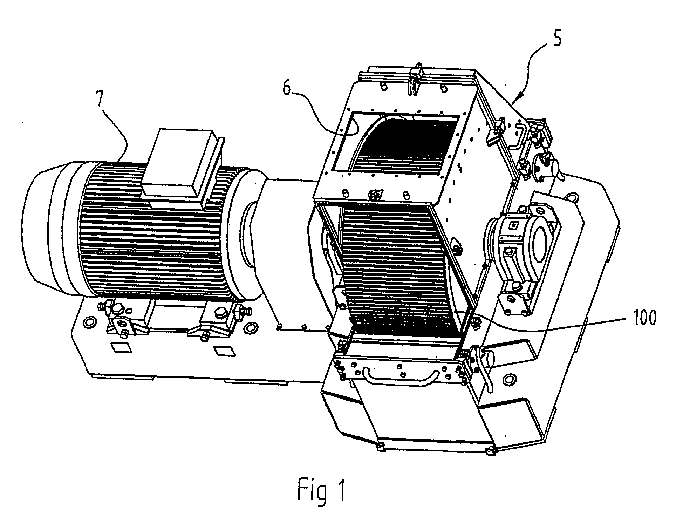

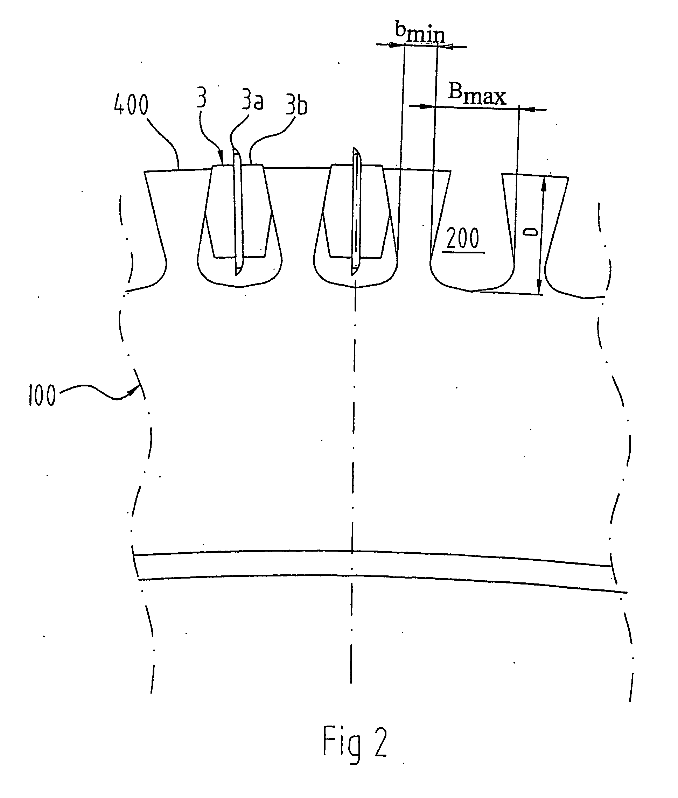

Fig. 1 illustrates a known grating machine 5 for grating potatoes or manioc roots. The machine has a grating roller 100 which is driven by a motor 7. The grating roller 100, which is shown in a partial end view in Fig. 2, has axial grater tools 3 along its periphery. Potatoes or manioc roots are introduced through an opening 6 and bounce against the grater tools on the rotating grating roller 100. During grating, the cell walls are destroyed and the starch grains are released.

The grating roller 100 has axial grooves 200 uniformly distributed along its periphery. A grater tool 3 is arranged in each groove 200. A grater tool 3 is here shown in the form of a grating strip 3a which is surrounded by two locking strips 3b. The grater tools 3 are axially inserted into the grooves 200 and are fixed radially outwards therein. Each groove has an undercut with a width increasing radially inwards from the mouth of the groove to hold a grater tool in the radial direction. A groove should not be formed with pointed corners since they could constitute indications of fracture. The grating roller 100 shown in Fig. 2 therefore has grooves 200 which in cross-section are substantially drop-shaped.

The grooves 200 are spaced apart by axial partitions 400 with a predetermined minimum width bₘᵢₙ seen in the circumferential direction. Said minimum width bₘᵢₙ is determined by the strength of the roller material in combination with a given grater tool. A grater tool can be symmetrical or unsymmetrical and the shape of the groove is, of course, adjusted accordingly.

On rotation of the grating roller 100, the grater tools 3 will be pressed outwards by centrifugal force and wedged against the groove walls. The grater tools 3 in Fig. 2 are shown in this position.

The grating strips 3a are quickly worn down and must frequently be exchanged. For instance, when grating potatoes, the grating strips are exchanged after 48 h, each exchange causing expensive stoppage.

It is known to use reversible grating strips, which certainly doubles their life but still causes stoppage when reversing the blades.

There is a need to increase the production capacity of the described grating machine. One way of increasing the capacity is to increase the roller speed, that is make each grating strip 3a more often hit the raw product that is to be grated. However, this results in quicker wearing down of the grating strips 3a and, thus, more frequent exchanges. In the further development of a grating machine it is above all important to increase the time between exchanges and design grater tools that allow quick exchanges. Since grating strips and locking strips are parts that are quickly worn, they must also be designed so as to be easy and inexpensive to manufacture.

The object of the invention is to provide a grating roller for the grating machine illustrated in Fig. 1 and generally described above, which grating roller allows grater tools to be arranged more closely together and, consequently, an increased production capacity compared with the grating roller shown in Fig. 2.

Furthermore with more closely arranged grater tools, finer grating and thus a higher yield are obtained, which results in a reduced loss of starch.

### Summary of the Invention

This object is achieved by a grating roller of the type stated by way of introduction, which is characterised in that the partitions have said predetermined minimum width (bₘᵢₙ) in a portion which is positioned less than 60% of the groove depth (D) from the periphery of the grating roller. This portion is advantageously arranged at such a distance from the periphery of the grating roller that the undercut of each groove extends radially inwards substantially only over the surface of the partitions, which define the groove, against which surface a grater tool abuts.

For easy handling in connection with exchange, each groove is preferably symmetrical with respect to a radius which extends through the groove, and each grater tool is symmetrical with respect to a plane which is perpendicular to said radius. As a result, two identical reversible locking strips can be used to fix the grating strip. Two locking strips make it possible to use a wider and thus more durable grating strip.

The grater tool is preferably formed with cavities, which reduces the weight of the tool and thus makes it possible to reduce the predetermined minimum width bₘᵢₙ.

### Brief Description of the Drawings

The invention will in the following be described in more detail by way of a preferred but not limiting embodiment and with reference to the accompanying drawings.
Fig. 1 is a perspective view of the above-described prior-art grating machine, its protective cover being removed for the sake of clarity.
Fig. 2 is a partial end view and illustrates the above-described prior-art grating roller with grater tools inserted into some of the grooves.
Fig. 3 corresponds to Fig. 2 but illustrates a grating roller according to the invention.

### Description of Preferred Embodiments

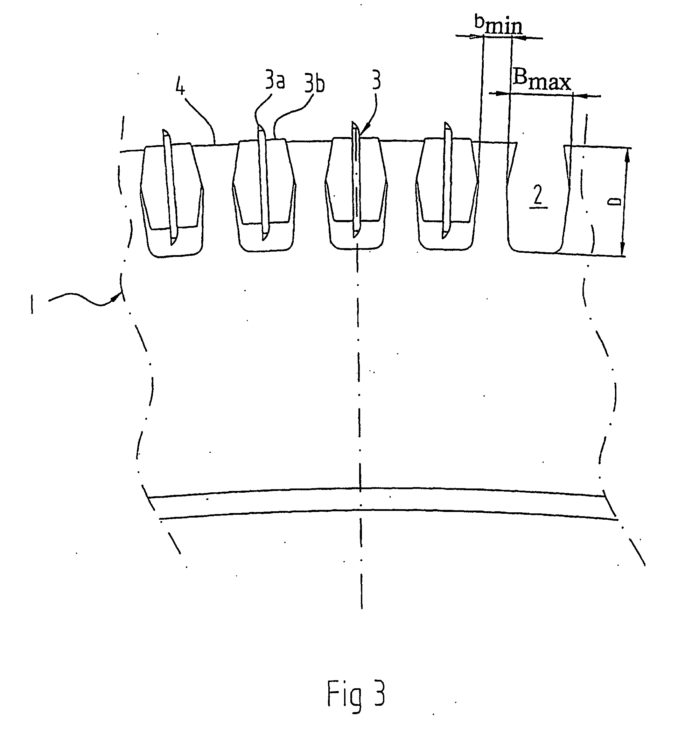

Fig. 3 shows a grating roller 1 according to the invention. This grating roller is intended to replace the grating roller 100 in a grating machine as shown in Fig. 1.

The grating roller 1 according to the invention has, like the grating roller 100 shown in Fig. 2, axial grooves 2 which are uniformly distributed along its periphery. A grater tool 3 is arranged in each groove 2. Each grater tool 3 comprises a reversible grating strip 3a, which is surrounded by two locking strips 3b which are also reversible, that is each grater tool is symmetrical with respect to a plane which is perpendicular to a radius extending through the centre of the grater tool. The grater tools 3 are axially inserted into the grooves 2 and are radially outwards fixed in the grooves.

The grooves 2 are spaced apart by axial partitions 4 with a predetermined minimum width bₘᵢₙ, seen in the circumferential direction. Said minimum width bₘᵢₙ is determined by the strength of the roller material in combination with the shape of the grooves 2 and the shape and weight of the grater tools 3. A higher tool weight implies, for example, a greater minimum width bₘᵢₙ. Both the grating roller 1 and the grater tools 3 are suitably made of steel.

What distinguishes the grating roller 1 according to the invention from the grating roller 100 in Fig. 2 is the design of the grooves. Each groove 2 has an undercut with a width increasing radially inwards from the mouth of the groove. The groove 2 must, as mentioned above, be undercut to hold a grater tool 3 in the radial direction outwards.

The undercut of the groove 2 has the same inclination as the undercut of the groove 200 but not the same extent. In the grating roller 1 in Fig. 3, the undercut of the grooves 2 extends radially inwards only over the surface of the partitions 4, which define the groove 2, against which surface a grater tool 3 abuts. Then the two side faces of the grooves 2 are radially inwards substantially parallel or slightly converging. The undercut of the grating roller 100 extends basically radially inwards along the entire depth D of the groove 200.

The predetermined minimum width bₘᵢₙ is generally positioned on a circular arc at a radial distance r from the centre of the grating roller. The groove has a width varying along the depth and its maximum width Bₘₐₓ is also positioned along a circular arc at the same radial distance r from the centre of grating roller. The greatest possible number of grooves in a grating roller is determined by the circumference O of a circle with the radius r since (number of grooves) x (bₘᵢₙ + Bₘₐₓ) = O.

It will thus be possible to increase the number of grooves in the grating roller 1 according to the invention owing to the limited undercut, which means that the distance decreases between the periphery of the grating roller 1 and the portion where the predetermined minimum wall width bₘᵢₙ is positioned. Said minimum wall width bₘᵢₙ is in the preferred embodiment positioned on the line where the abutment surface between the side face of a groove 2 and a grater tool ceases radially inwards. According to the invention, said distance is about 60% at most, or preferably 50% at the most, of the depth D. In the preferred embodiment shown in Fig. 3, the minimum width bₘᵢₙ is positioned in a portion which is located about 40% of the depth D from the periphery of the grating roller.

To maximise the number of grooves per grating roller, the radius r is thus selected to be as close as possible to the radius of the grating roller with regard to the abutment surface that is necessary for the fixing of the grater tool radially outwards. This abutment surface is due to the degree of undercut and the shape and weight of the grater tool.

With a diameter of 1000 mm, a minimum wall width bₘᵢₙ of about 5 mm and a grater tool of the type shown, the number of grooves per grating roller 1 according to the invention is 187 and per grating roller 100 according to Fig. 2 only 160. For an adequate comparison of the significance of the design of the groove between the grating roller 1 in Fig. 3 according to the invention and the prior-art grating roller 100 in Fig. 2, both rollers are illustrated with the same type of grater tools.

The two locking strips 3b in the grater tool 3 are suitably identical and symmetrical with respect to a plane which extends perpendicular to a radius passing through the grater tool. As a result, they can be inserted into the grooves turned up or down. If the grating strips 3b are to be reversed but not exchanged, the entire grater tool 3 is thus turned without time-consuming removal of the locking strips from the grating strip, turning and reassembling. When exchanging a grating strip 3a, the operation of checking in which direction the locking strips 3b are turned is omitted. The grating strip 3a and the locking strips 3b further have pins and holes (not shown) to hold each other in the longitudinal direction.

The grating strip 3a and/or locking strips 3b of the grater tool 3 is/are further provided with recesses (not shown). This reduces the weight of the strips 3a and 3b, which in turn means that either the predetermined minimum length bₘᵢₙ can be reduced, or the rotating mass and thus the stop and start time of the grating roller 1 can be reduced.

On rotation of the grating roller 1, the grater tools 3 will be pressed outwards by centrifugal force and wedged against the groove walls, with the grating strips 3a projecting beyond the surface of the grating roller 1. The grater tools 3 are shown in this position in Fig. 3. It is important for wear to occur on the easily exchangeable parts, that is on the grating strips 3a and locking strips 3b, and not on the grating roller 1. Also the locking strips 3b, which surround a grating strip 3a, should therefore project beyond the outer surface of the grating roller as the grating roller rotates.

With a given roller radius and a minimum wall width bₘᵢₙ, it is possible to achieve a higher production capacity while maintaining the speed of the roller with a grating roller according to the invention, compared with a grating roller according to Fig. 2.

Alternatively, it is possible, with maintained production capacity, to reduce the speed of the roller and thus reduce the energy consumption with a grating roller according to the invention, compared with a grating roller according to Fig. 2.

Even if the invention has been described in connection with a grater tool with two symmetrical locking strips, it will be appreciated that the inventive idea of optimising the number of tools per grating roller based on a given minimum wall width bₘᵢₙ is applicable also to a grating roller whose grater tools have only one locking strip and/or unsymmetrical locking strips.

## Claims

1. A grating roller, especially intended for grating potatoes and manioc roots, which along its periphery is provided with a plurality of axial grooves (2) for holding strip-shaped grater tools (3), which are axially inserted into the grooves (2), which have an undercut with a width increasing radially inwards from the mouth of the grooves,
the grooves being spaced apart by axial partitions (4) with a predetermined minimum wall width (bₘᵢₙ), seen in the circumferential direction, and having a radial depth (D),
**characterised in that**
the partitions have said predetermined minimum width (bₘᵢₙ) in a portion which is positioned less than 60% of the groove depth (D) from the periphery of the grating roller.

2. A grating roller as claimed in claim 1, in which the undercut of each groove extends radially inwards substantially only over the surface of the partitions, which define the groove, against which surface a grater tool abuts.

3. A grating roller as claimed in claim 1 or 2, in which each groove is symmetrical with respect to a radius which extends through the groove.

4. A grating roller as claimed in claim 3, in which each grater tool is symmetrical with respect to a plane which is perpendicular to said radius.

5. A grating roller as claimed in any one of claims 1-4, in which the grater tool is formed with cavities.

## Patentansprüche

1. Raspelwalze, besonders zum Raspeln von Kartoffeln und Maniokwurzeln bestimmt, die ihren Umfang entlang mit mehreren axialen Nuten (2) zum Halten streifenförmiger Raspelwerkzeuge (3) versehen ist, welche axial in die Nute (2) eingefügt sind, welche einen Unterschnitt mit einer Breite aufweisen, die von der Mündung der Nute radial nach innen zunimmt,
wobei die Nute bei Betrachtung in der Umfangsrichtung durch axiale Abteilungen (4) mit einer vorgegebenen Mindestwandbreite (bₘᵢₙ) voneinander beabstandet sind und eine radiale Tiefe (D) aufweisen,
**dadurch gekennzeichnet, dass**
die Abteilungen die vorgegebene Mindestbreite (bₘᵢₙ) in einem Abschnitt aufweisen, der weniger als 60% der Nuttiefe (D) vom Umfang der Raspelwalze angeordnet ist.

2. Raspelwalze nach Anspruch 1, wobei der Unterschnitt jeder Nut im Wesentlichen nur über die Oberfläche der Abteilungen, die die Nut definieren, radial nach innen verläuft, wobei ein Raspelwerkzeug an die Oberfläche angrenzt.

3. Raspelwalze nach einem der Ansprüche 1 oder 2, wobei jede Nut bezüglich eines Radius symmetrisch ist, der durch die Nut verläuft.

4. Raspelwalze nach Anspruch 3, wobei jedes Raspelwerkzeug bezüglich einer Ebene symmetrisch ist, die senkrecht zu dem Radius steht.

5. Raspelwalze nach einem der Ansprüche 1 bis 4, wobei das Raspelwerkzeug mit Hohlräumen ausgebildet ist.

## Revendications

1. Rouleau râpeur, spécialement destiné à râper des pommes de terre et des racines de manioc, muni le long de sa périphérie d'une pluralité de rainures axiales (2) pour maintenir des outils à râper en forme de bandes (3), qui sont axialement insérés dans les rainures (2), qui ont un dégagement inférieur avec une largeur augmentant radialement vers l'intérieur depuis l'embouchure des rainures,
les rainures étant espacées par des parois axiales (4) avec une largeur de paroi minimale prédéterminée (bₘᵢₙ), vu dans la direction circonférentielle, et ayant une profondeur radiale (D),
**caractérisé en ce que**
les parois ont ladite largeur minimale prédéterminée (bₘᵢₙ) dans une partie placée à moins de 60% de la profondeur de rainure (D) depuis la périphérie du rouleau râpeur.

2. Rouleau râpeur selon la revendication 1, dans lequel le dégagement inférieur de chaque rainure s'étend radialement vers l'intérieur essentiellement uniquement au-dessus de la surface des parois qui définissent la rainure, contre laquelle surface un outil à râper vient buter.

3. Rouleau râpeur selon la revendication 1 ou 2, dans lequel chaque rainure est symétrique par rapport à un rayon qui s'étend à travers la rainure.

4. Rouleau râpeur selon la revendication 3, dans lequel chaque outil à râper est symétrique par rapport à un plan qui est perpendiculaire audit rayon.

5. Rouleau râpeur selon l'une quelconque des revendications 1 à 4, dans lequel l'outil à râper est formé de cavités.
